# EUROPÄISCHE PATENTSCHRIFT

(11) **EP 4 419 414 B1**
(45) Veröffentlichungstag und Bekanntmachung des Hinweises auf die Patenterteilung: **20.08.2025**
(21) Anmeldenummer: 22783341.5
(22) Anmeldetag: 23.09.2022
(51) Int. Cl.: B62J 6/05

(54) **NEIGEFAHRZEUG**
LEANING VEHICLE
VÉHICULE INCLINABLE

(30) Priorität: 20.10.2021 DE 102021127167
(43) Veröffentlichungstag der Anmeldung: 28.08.2024
(73) Patentinhaber: Bayerische Motoren Werke Aktiengesellschaft, 80809 München (DE)
(72) Erfinder: OTTILLINGER, Klaus, 86508 Rehling (DE); HAIRER, Michael, 80469 München (DE)
(86) Internationale Anmeldenummer: PCT/EP2022/076490
(87) Internationale Veröffentlichungsnummer: WO 2023/066598

(56) Entgegenhaltungen:
- JP-U- S61 106 493

## Beschreibung

Die Erfindung betrifft ein Neigefahrzeug mit mindestens einer Fahrzeugkomponente, wie Schwinge oder Lenker, die einen Aufnahmeabschnitt aufweist, und mit mindestens einer Beleuchtungseinheit, die einen Kopfabschnitt, in dem oder an dem mindestens ein Anzeigemittel angeordnet ist, die einen Fußabschnitt und die einen am Fußabschnitt angeordneten Fügeabschnitt umfasst, der parallel zum Aufnahmeabschnitt der Fahrzeugkomponente verläuft und mit dem die Beleuchtungseinheit an dem Aufnahmeabschnitt der Fahrzeugkomponente festgelegt ist, wobei die Beleuchtungseinheit entlang einer quer oder schräg zur Längsachse des Neigefahrzeugs verlaufenden Fügerichtung an dem Aufnahmeabschnitt festlegbar ist.

Bei Neigefahrzeugen, insbesondere bei Motorrädern, ist es bekannt, funktionsintegrierte Blinkleuchten in einem hinteren Bereich eines Rahmens rahmenfest festzulegen.

Der Fahrzeugrahmen kann in dem Bereich eine Schwinge umfassen, die bezüglich des restlichen Fahrzeugrahmens gefedert und gedämpft ausgebildet ist. Hierdurch ist es ermöglicht, Fahrbahnanregungen zu dämpfen und zu federn, wodurch eine Gefahr einer Beschädigung oder eines Reduzierens der Lebensdauer der funktionsintegrierten Blinkleuchte verringert ist.

Ein gattungsgemäßes Neigefahrzeug ist bekannt aus JP S61 106493 U.

Eine Aufgabe eines Ausführungsbeispiels einer Erfindung ist, ein Neigefahrzeug vorzuschlagen, bei dem die Lebensdauer einer funktionsintegrierten Blinkleuchte erhöht ist, insbesondere, wenn diese an einer ungefederten und ungedämpften Fahrzeugkomponente festgelegt ist.

Diese Aufgabe wird gelöst bei einem eingangs genannten Neigefahrzeug gelöst durch mindestens ein Verstärkungsmittel, das am Aufnahmeabschnitt der Fahrzeugkomponente festgelegt ist, wobei es quer zur Fügerichtung zumindest abschnittsweise an einer Koppelfläche des Fußabschnitts der Beleuchtungseinheit flächenhaft berührend anliegt und wobei es den Fußabschnitt umfangsseitig zumindest abschnittweise umgibt, und wobei die Beleuchtungseinheit in einer Richtung parallel zur Fügerichtung ihre längste Erstreckung umfasst.

Dadurch, dass das Neigefahrzeug ein Verstärkungsmittel umfasst, das am Aufnahmeabschnitt der Fahrzeugkomponente festgelegt ist und hierbei quer zur Fügerichtung zumindest abschnittsweise an einer Koppelfläche des Fußabschnitts der Beleuchtungseinheit flächenhaft berührend anliegt und den Fußabschnitt umfangseitig zumindest abschnittsweise umgibt, ist die Beleuchtungseinheit, insbesondere im Bereich des Fußabschnitts, durch das Verstärkungsmittel gestützt und verstärkt. Hierdurch ist die Gefahr eines Abbrechens der Beleuchtungseinheit, insbesondere im Bereich des Fußabschnitts, reduziert und die Lebensdauer der Beleuchtungseinheit erhöht.

Bei der Fahrzeugkomponente kann es sich um eine Fahrzeugschwinge handeln. Diese kann gedämpft und gefedert oder ungedämpft und ungefedert ausgebildet sein. Insbesondere kann die Schwinge im Bereich eines Fahrzeughecks angeordnet sein.

Bei der Beleuchtungseinheit kann es sich um eine beliebig ausgebildete Funktionseinheit handeln, durch die durch das Anzeigemittel eine Information für weitere Verkehrsteilnehmer, insbesondere dem Neigefahrzeug nachfolgende Verkehrsteilnehmer, anzeigbar ist. Das Anzeigemittel kann solchenfalls eine Leuchte, insbesondere einen Scheinwerfer, oder eine Wiederholblinkleuchte umfassen oder einen Bildschirm oder ein Display.

Bei einer Ausführungsform des Neigefahrzeugs umfasst die Beleuchtungseinheit eine im Neigefahrzeug funktionsintegrierte Wiederholblinkleuchte, die an einer als rahmenfeste Schwinge ausgebildeten Fahrzeugkomponente ungefedert und ungedämpft festgelegt ist.

Unter einem Neigefahrzeug werden Fahrräder, Motorräder oder motorradähnliche Kraftfahrzeuge, wie Motorroller, insbesondere zwei-, drei- oder vierrädrige Motorroller, Scooter, neigbare Trikes, Quads oder Dergleichen verstanden.

Es ist denkbar, dass das Verstärkungsmittel lediglich am Fußabschnitt der Beleuchtungseinheit anliegt, insbesondere flächenhaft. Das Verstärken der Beleuchtungseinheit durch das Verstärkungsmittel lässt sich verbessern, wenn das Verstärkungsmittel am Fußabschnitt der Beleuchtungseinheit festgelegt ist, insbesondere form-, stoff- und/oder kraftschlüssig.

Wenn das Verstärkungsmittel am Fußabschnitt der Beleuchtungseinheit stoffschlüssig festgelegt ist, kann das Verstärkungsmittel an der Beleuchtungseinheit angeschweißt, angelötet, angeklebt oder Dergleichen sein.

Wenn das Verstärkungsmittel formschlüssig an der Beleuchtungseinheit festgelegt ist, kann zumindest in den Richtungen, in denen eine Bewegungsamplitude der Beleuchtungseinheit beim Betrieb des Neigefahrzeugs zu erwarten ist, ein Hintergriff bezüglich der jeweiligen Bewegungsrichtung gebildet werden.

Wenn das Verstärkungsmittel kraftschlüssig an der Beleuchtungseinheit festgelegt ist, kann aufgrund der zwischen Verstärkungsmittel und Beleuchtungseinheit vorherrschenden Reibung eine Verstärkung erzielt werden.

Bei einer Weiterbildung letztgenannter Ausführungsformen erweist es sich als vorteilhaft, wenn das Verstärkungsmittel mindestens ein elastisch biegbares Festlegeelement umfasst, das beim Überführen des Verstärkungsmittels entlang einer Koppelrichtung eine gekoppelte Anordnung quer zur Koppelrichtung verdrängbar ist und in der gekoppelten Anordnung automatisch in die unverdrängte Anordnung bewegbar ist und das in der gekoppelten Anordnung einen Rücksprung am Fußabschnitt der Beleuchtungseinheit bezüglich der Koppelrichtung hintergreift.

Wenn das Verstärkungsmittel mindestens ein elastisch biegbares Festlegeelement umfasst, kann das Verstärkungsmittel auf einfache Weise am Fußabschnitt der Beleuchtungseinheit festgeclipst werden. Hierbei wird das elastisch biegbare Festlegeelement beim Überführen des Verstärkungsmittels entlang der Koppelrichtung quer zur Koppelrichtung verdrängt und verrastet bei Erreichen der gekoppelten Anordnung automatisch in die unverdrängte Anordnung zurück und hintergreift den Fußabschnitt am Rücksprung. Hierdurch sind Verstärkungsmittel und Beleuchtungseinheit auf einfache Weise form- und/oder kraftschlüssig miteinander koppelbar.

Um ein Festlegen des Verstärkungsmittels an der Beleuchtungseinheit weiter zu verbessern, umfasst das Verstärkungsmittel bei einer Ausführungsform des Neigefahrzeugs mindestens zwei Festlegeelemente und der Fußabschnitt der Beleuchtungseinheit mindestens zwei Rücksprünge, wobei in der gekoppelten Anordnung der Fußabschnitt zwischen den beiden Festlegeelementen angeordnet ist und wobei die beiden Festlegeelemente einen U-förmigen oder klammerartigen Querschnitt aufweisen, und/oder wobei die mindestens zwei Festlegeelemente an den jeweils freien Enden einen hakenartigen Abschnitt umfassen, der in Richtung auf das freie Ende des gegenüberliegenden Festlegeelements erstreckt ist und der in der gekoppelten Anordnung an dem jeweiligen Rücksprung des Fußabschnitts anliegt.

Das mindestens eine Festlegeelement kann seine längste Erstreckung parallel zur Fahrtrichtung des Neigefahrzeugs umfassen. Ferner sind Ausführungsformen denkbar, bei denen das Festlegeelement seine längste Erstreckung parallel oder schräg zur Hochachse oder Querachse umfasst.

Darüber hinaus lässt sich eine form- und/oder kraftschlüssige Verbindung quer zur Koppelrichtung auf einfache Weise gewährleisten, wenn das mindestens eine Festlegeelement des Verstärkungsmittels auf der der Koppelfläche des Fußabschnitts zugewandten Seite mindestens einen in Richtung auf die Koppelfläche des Fußabschnitts erstreckten Vorsprung umfasst und/oder wenn der mindestens eine Fußabschnitt auf der dem Festlegeelement des Verstärkungsmittels zugewandten Seite mindestens eine Ausnehmung in der Koppelfläche umfasst, die korrespondierend, insbesondere komplementär, zum Vorsprung des Festlegeelements ausgebildet ist und in der der Vorsprung in der gefügten Anordnung eingreifend angeordnet ist.

Durch die Ausnehmung in der Koppelfläche des Fußabschnitts der Beleuchtungseinheit ist das Festlegeelement mit dem mindestens einen Vorsprung beim Überführen entlang der Koppelrichtung führbar. Darüber hinaus wird das mindestens eine Festlegeelement durch den mindestens einen Vorsprung durch das Anordnen des Vorsprungs in der Ausnehmung gegen ein Bewegen quer zur Koppelrichtung festgelegt.

Darüber hinaus ist bei weiteren Ausführungsformen des Neigefahrzeugs vorgesehen, dass das mindestens eine Festlegeelement eine Mehrzahl von, insbesondere parallel zueinander, verlaufend angeordneten Vorsprüngen und der Fußabschnitt eine Mehrzahl von, insbesondere parallel, zueinander verlaufend angeordneten Ausnehmungen umfasst, wobei in der gefügten Anordnung jeweils ein Vorsprung in jeweils einer Ausnehmung in diese eingreifend angeordnet ist.

Um das Verstärkungsmittel auf einfache Weise an der Fahrzeugkomponente festzulegen, erweist es sich als vorteilhaft, wenn das Verstärkungsmittel einen parallel zum Aufnahmeabschnitt der Fahrzeugkomponente verlaufenden Koppelabschnitt umfasst, der mindestens eine Öffnung umfasst, durch die das Verstärkungsmittel durch ein Festlegemittel lösbar am Aufnahmeabschnitt der Fahrzeugkomponente festlegbar ist.

Das mindestens eine Festlegemittel kann beispielsweise eine Schraube oder einen Bolzen umfassen, das durch die Öffnung des Koppelabschnitts des Verstärkungsmittel hindurchsteckbar und durch eine Mutter auf der dem Verstärkungsmittel abgewandten Seite des Aufnahmeabschnitts der Fahrzeugkomponente festlegbar ist.

Ferner lässt sich die Beleuchtungseinheit auf einfache Weise an der Fahrzeugkomponente festlegen, wenn der Fügeabschnitt der Beleuchtungseinheit mindestens eine Aussparung umfasst, durch die die Beleuchtungseinheit durch ein weiteres Festlegemittel lösbar am Aufnahmeabschnitt der Fahrzeugkomponente festlegbar ist und/oder wenn der Fügeabschnitt der Beleuchtungseinheit die Koppelfläche des Fußabschnitt in der gefügten Anordnung in Richtung Verstärkungsmittel überragt.

Auch hier kann das Festlegemittel eine Schraube oder Bolzen umfassen, durch das der Fügeabschnitt der Beleuchtungseinheit auf der der Beleuchtungseinheit abgewandten Seite des Aufnahmeabschnitts der Fahrzeugkomponente mit einer Mutter festlegbar ist. Dadurch, dass der Fügeabschnitt der Beleuchtungseinheit die Koppelfläche des Fußabschnitts in der gefügten Anordnung in Richtung Verstärkungsmittel überragt, ist der Fußabschnitt unabhängig vom Fügeabschnitt dimensionierbar.

Grundsätzlich ist es denkbar, dass beim Fügen der Beleuchtungseinheit und des Verstärkungsmittels am Aufnahmeabschnitt der Fahrzeugkomponente zuerst die Beleuchtungseinheit am Aufnahmeabschnitt festgelegt wird und in einem darauffolgenden Schritt das Verstärkungsmittel festgelegt wird. Solchenfalls kann das Verstärkungsmittel den Fügeabschnitt der Beleuchtungseinheit, quer zur Fügerichtung betrachtet, in der gefügten Anordnung überdecken oder zumindest abschnittsweise überlappen.

Um die Beleuchtungseinheit unabhängig von der Anordnung des Verstärkungsmittels an dem Aufnahmeabschnitt der Fahrzeugkomponente anordnen zu können, ist bei einer Weiterbildung des Neigefahrzeugs vorgesehen, dass das Verstärkungsmittel zwischen den beiden Festlegeelementen einen durchgehenden Freiraum umfasst, der mit dem Fügeabschnitt der Beleuchtungseinheit überlappt und durch den der Fügeabschnitt der Beleuchtungseinheit zumindest teilweise, insbesondere im Bereich der Aussparung, von außen zugänglich ist.

Durch den Freiraum ist es ermöglicht, das Festlegemittel durch die Aussparung des Fügeabschnitts der Beleuchtungseinheit hindurchzustecken und zu verschrauben. Ferner ist es hierdurch ermöglicht, Verstärkungsmittel und Beleuchtungseinheit vor dem Festlegen an dem Aufnahmeabschnitt der Fahrzeugkomponente miteinander zu fügen. Hierdurch sind Beleuchtungseinheit und Verstärkungsmittel vormontierbar und in der vormontierten Anordnung jeweils einzeln bzw. gemeinsam an dem Aufnahmeabschnitt der Fahrzeugkomponente festlegbar.

Um eine Kraftaufnahme bzw. ein Federn oder Dämpfen durch das Verstärkungsmittel zu verbessern, umfasst das Verstärkungsmittel eines Ausführungsbeispiels des Neigefahrzeugs mindestens ein rippenartiges Stützelement, das sich von dem mindestens einen Festlegeelement bis zum Koppelabschnitt erstreckt und das in einer parallel zu einer durch die Fügerichtung verlaufenden Ebene einen keilförmigen Querschnitt umfasst.

Das Neigefahrzeug lässt sich kompakt ausbilden, wenn das Verstärkungsmittel, insbesondere das mindestens eine Festlegeelement, der mindestens eine Koppelabschnitt und/oder das mindestens eine Stützelement, ein gemeinsames einstückiges Bauteil, insbesondere Spritzgussbauteil, bilden.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform des Neigefahrzeugs.

In der Zeichnung zeigt:

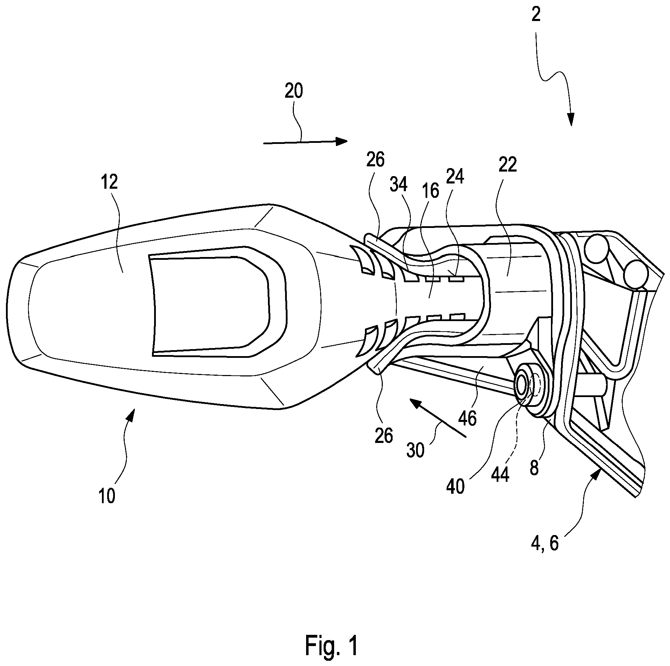

- Figur 1: Eine perspektivische Rückansicht auf ein Ausführungsbeispiel eines Teilbereichs des Neigefahrzeugs;

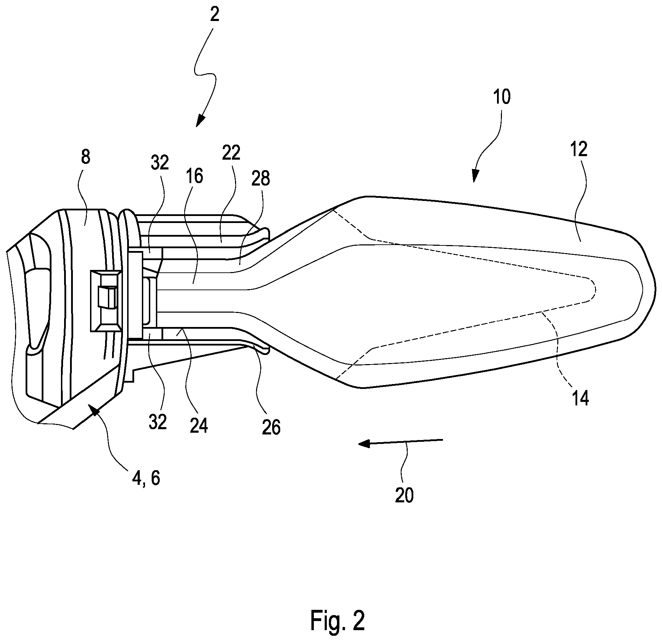

- Figur 2: Eine perspektivische Vorderansicht auf das Ausführungsbeispiel gemäß Figur 1;
- Figur 3: Eine perspektivische Rückansicht auf das Ausführungsbeispiel gemäß Figur 1 ohne Verstärkungsmittel.

Die Figuren zeigen einen Ausschnitt eines insgesamt mit dem Bezugszeichen 2 versehenen Neigefahrzeugs (in den Figuren nur auszugsweise dargestellt). Das Neigefahrzeug 2 umfasst mindestens eine Fahrzeugkomponente 4, die bei dem in den Figuren gezeigten Ausführungsbeispiel eine Schwinge 6 umfasst. Die Fahrzeugkomponente 4 umfasst einen Aufnahmeabschnitt 8.

Darüber hinaus umfasst das Neigefahrzeug 2 eine Beleuchtungseinheit 10, die einen Kopfabschnitt 12, in dem oder an dem mindestens ein Anzeigemittel 14 angeordnet ist. Darüber hinaus umfasst die Beleuchtungseinheit 10 einen Fußabschnitt 16 und einen am Fußabschnitt 16 angeordneten Fügeabschnitt 18, mit dem die Beleuchtungseinheit 10 am Aufnahmeabschnitt 8 der Fahrzeugkomponente 4 festgelegt ist.

Die Beleuchtungseinheit 10 ist entlang einer quer oder schräg zur Längsachse des Neigefahrzeugs 2 verlaufenden Fügerichtung 20 an dem Aufnahmeabschnitt 8 festlegbar. Darüber hinaus umfasst die Beleuchtungseinheit 10 parallel zur Fügerichtung 20 ihre längste Erstreckung.

Ferner umfasst das Neigefahrzeug 2 ein Verstärkungsmittel 22, das am Aufnahmeabschnitt 8 der Fahrzeugkomponente 4 festgelegt ist. Hierbei liegt das Verstärkungsmittel 22 quer zur Fügerichtung 20 abschnittsweise an einer Koppelfläche 24 des Fußabschnitts 16 der Beleuchtungseinheit 10 flächenhaft berührend an und umgibt den Fußabschnitt 16 umfangsseitig zumindest abschnittsweise.

Bei dem in den Figuren gezeigten Ausführungsbeispiel umfasst das Verstärkungsmittel 22 zwei elastisch biegbare Festlegeelemente 26, die in einer gekoppelten Anordnung an einem Rücksprung 28 des Fußabschnitts 16 der Beleuchtungseinheit 10 einen Hintergriff bezüglich einer Koppelrichtung 30 bilden. An den Festlegeelementen 26 wird ein hakenartiger Abschnitt 32 gebildet, der in der gefügten Anordnung an dem jeweiligen Rücksprung 28 des jeweiligen Fußabschnitts 16 anliegt.

Darüber hinaus umfasst bei dem in den Figuren gezeigten Ausführungsbeispiel das Verstärkungsmittel 22 eine Mehrzahl von Vorsprüngen 34, die parallel zur Koppelrichtung 30 erstreckt sind und die in korrespondierend, insbesondere komplementär ausgebildete Ausnehmungen 36 in der Koppelfläche 24 des Fußabschnitts 16 der Beleuchtungseinheit 10 eingreifen.

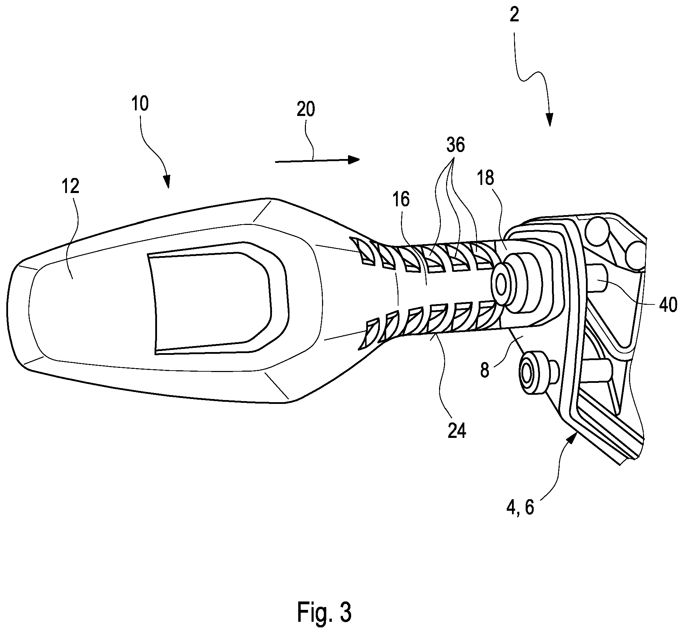

Darüber hinaus umfasst das Verstärkungsmittel 22 zwischen den beiden Festlegeelementen 26 einen durchgehenden Freiraum 38, durch den der Fügeabschnitt 18 der Beleuchtungseinheit 10 von außen zugänglich ist. Wie in Figur 3 ersichtlich, ist ein Festlegemittel 40 solchenfalls auch dann am Fügeabschnitt 18 der Beleuchtungseinheit 10 anordenbar, wenn das Verstärkungsmittel 22 bereits mit der Beleuchtungseinheit 10 gekoppelt ist.

Um das Verstärkungsmittel 22 am Aufnahmeabschnitt 8 der Fahrzeugkomponente 4 festzulegen, umfasst das Verstärkungsmittel 22 einen Koppelabschnitt 42, der mindestens eine Öffnung 44 umfasst, durch das ein Festlegemittel 40 hindurchsteckbar und ein Festlegen am Aufnahmeabschnitt 8 der Fahrzeugkomponente 4 ermöglicht ist.

Um eine Aufnahme von Kräften aus der Kombination von Beleuchtungseinheit 10 und Verstärkungsmittel 22 zu erhöhen, umfasst das Verstärkungsmittel 22 mindestens ein rippenartiges Stützelement 46, das sich von dem mindestens einem Festlegeelement 26 bis hin zum Koppelabschnitt 42 erstreckt. Im Folgenden wird kurz die Wirkungsweise des erfindungsgemäßen Neigefahrzeugs beschrieben:
Vor dem Anordnen der Beleuchtungseinheit 10 an der Fahrzeugkomponente 4, wird das Verstärkungsmittel 22 an der Beleuchtungseinheit 10 angesetzt. Durch Drücken des Verstärkungsmittels 22 entlang der Koppelrichtung 30 werden die beiden Festlegeelemente 26 des Verstärkungsmittels 22 quer zur Koppelrichtung 30 elastisch verdrängt und verrasten bei Erreichen der Rücksprünge 28 am Fußabschnitt 16 mit der Beleuchtungseinheit 10. Derart gefügt werden sowohl Beleuchtungseinheit 10 als auch Verstärkungsmittel 22 über Festlegemittel 40 durch Verschrauben des Fügeabschnitts 18 der Beleuchtungseinheit 10 und Fügen des Koppelabschnitts 42 des Verstärkungsmittels 22 mit dem Aufnahmeabschnitt 8 der Fahrzeugkomponente 4 verschraubt.

### Bezugszeichenliste

- 2: Neigefahrzeug
- 4: Fahrzeugkomponente
- 6: Schwinge
- 8: Aufnahmeabschnitt
- 10: Beleuchtungseinheit
- 12: Kopfabschnitt
- 14: Anzeigemittel
- 16: Fußabschnitt
- 18: Fügeabschnitt
- 20: Fügerichtung
- 22: Verstärkungsmittel
- 24: Koppelfläche
- 26: Festlegeelement
- 28: Rücksprung
- 30: Koppelrichtung
- 32: hakenartiger Abschnitt
- 34: Vorsprung
- 36: Ausnehmung
- 38: Freiraum
- 40: Festlegemittel
- 42: Koppelabschnitt
- 44: Öffnung
- 46: Stützelement

## Patentansprüche

1. Neigefahrzeug (2), mit mindestens einer Fahrzeugkomponente (4), wie Schwinge (6) oder Lenker, die einen Aufnahmeabschnitt (8) aufweist, und mit mindestens einer Beleuchtungseinheit (10), die einen Kopfabschnitt (12), in dem oder an dem mindestens ein Anzeigemittel (14) angeordnet ist, die einen Fußabschnitt (16) und die einen am Fußabschnitt (16) angeordneten Fügeabschnitt (18) umfasst, der parallel zum Aufnahmeabschnitt (8) der Fahrzeugkomponente (4) verläuft und mit dem die Beleuchtungseinheit (10) an dem Aufnahmeabschnitt (8) der Fahrzeugkomponente (4) festgelegt ist, wobei die Beleuchtungseinheit (10) entlang einer quer oder schräg zur Längsachse des Neigefahrzeugs (2) verlaufenden Fügerichtung (20) an dem Aufnahmeabschnitt (8) festlegbar ist, **gekennzeichnet durch** mindestens ein Verstärkungsmittel (22), das am Aufnahmeabschnitt (8) der Fahrzeugkomponente (4) festgelegt ist, wobei es quer zur Fügerichtung (20) zumindest abschnittsweise an einer Koppelfläche (24) des Fußabschnitts (16) der Beleuchtungseinheit (10) flächenhaft berührend anliegt und wobei es den Fußabschnitt (16) umfangsseitig zumindest abschnittweise umgibt, und wobei die Beleuchtungseinheit (10) in einer Richtung parallel zur Fügerichtung (20) ihre längste Erstreckung umfasst.

2. Neigefahrzeug (2) nach Anspruch 1, **dadurch gekennzeichnet, dass** das Verstärkungsmittel (22) am Fußabschnitt (16) der Beleuchtungseinheit (10) festgelegt ist, insbesondere form-, stoff- und/oder kraftschlüssig.

3. Neigefahrzeug (2) nach Anspruch 2, **dadurch gekennzeichnet, dass** das Verstärkungsmittel (22) mindestens ein elastisch biegbares Festlegeelement (26) umfasst, das beim Überführen des Verstärkungsmittels (22) entlang einer Koppelrichtung (30) eine gekoppelte Anordnung quer zur Koppelrichtung (30) verdrängbar ist und in der gekoppelten Anordnung automatisch in die unverdrängte Anordnung bewegbar ist und das in der gekoppelten Anordnung einen Rücksprung (28) am Fußabschnitt (16) der Beleuchtungseinheit (10) bezüglich der Koppelrichtung (30) hintergreift.

4. Neigefahrzeug (2) nach Anspruch 3, **dadurch gekennzeichnet, dass** das Verstärkungsmittel (22) mindestens zwei Festlegeelemente (26) und der Fußabschnitt (16) der Beleuchtungseinheit (10) mindestens zwei Rücksprünge (28) umfasst, wobei in der gekoppelten Anordnung der Fußabschnitt (16) zwischen den beiden Festlegeelementen (26) angeordnet ist und wobei die beiden Festlegeelemente (26) einen U-förmigen oder klammerartigen Querschnitt aufweisen, und/oder dass die mindestens zwei Festlegeelemente (26) an den jeweils freien Enden einen hakenartigen Abschnitt (32) umfassen, der in Richtung auf das freie Ende des gegenüberliegenden Festlegeelements (26) erstreckt ist und der in der gekoppelten Anordnung an dem jeweiligen Rücksprung (28) des Fußabschnitts (16) anliegt.

5. Neigefahrzeug (2) nach Anspruch 3 oder 4, **dadurch gekennzeichnet, dass** das mindestens eine Festlegeelement (26) des Verstärkungsmittels (22) auf der der Koppelfläche (24) des Fußabschnitts (16) zugewandten Seite mindestens einen in Richtung auf die Koppelfläche (24) des Fußabschnitts (16) erstreckten Vorsprung (34) umfasst und/oder dass der mindestens eine Fußabschnitt (16) auf der dem Festlegeelement (26) des Verstärkungsmittels (22) zugewandten Seite mindestens eine Ausnehmung (36) in der Koppelfläche (24) umfasst, die korrespondierend, insbesondere komplementär, zum Vorsprung (34) des Festlegeelements (26) ausgebildet ist und in der der Vorsprung (34) in der gefügten Anordnung eingreifend angeordnet ist.

6. Neigefahrzeug (2) nach einem der vorhergehenden Ansprüche, **dadurch gekennzeichnet, dass** das Verstärkungsmittel (22) einen parallel zum Aufnahmeabschnitt (8) der Fahrzeugkomponente (4) verlaufenden Koppelabschnitt (42) umfasst, der mindestens eine Öffnung (44) umfasst, durch die das Verstärkungsmittel (22) durch ein Festlegemittel (40) lösbar am Aufnahmeabschnitt (8) der Fahrzeugkomponente (4) festlegbar ist.

7. Neigefahrzeug (2) nach Anspruch 6, **dadurch gekennzeichnet, dass** der Fügeabschnitt (18) der Beleuchtungseinheit (10) mindestens eine Aussparung umfasst, durch die die Beleuchtungseinheit (10) durch ein weiteres Festlegemittel (40) lösbar am Aufnahmeabschnitt (8) der Fahrzeugkomponente (4) festlegbar ist und/oder dass der Fügeabschnitt (18) der Beleuchtungseinheit (10) die Koppelfläche (24) des Fußabschnitts (16) in der gefügten Anordnung in Richtung Verstärkungsmittel (22) überragt.

8. Neigefahrzeug (2) nach einem der vorhergehenden Ansprüche, **dadurch gekennzeichnet, dass** das Verstärkungsmittel (22) zwischen den beiden Festlegeelementen (26) einen durchgehenden Freiraum (38) umfasst, der mit dem Fügeabschnitt (18) der Beleuchtungseinheit (10) überlappt und durch den der Fügeabschnitt (18) der Beleuchtungseinheit (10) zumindest teilweise, insbesondere im Bereich der Aussparung, von außen zugänglich ist.

9. Neigefahrzeug (2) nach einem der vorhergehenden Ansprüche, **dadurch gekennzeichnet, dass** das Verstärkungsmittel (22) mindestens ein rippenartiges Stützelement (46) umfasst, das sich von dem mindestens einen Festlegeelement (26) bis zum Koppelabschnitt (42) erstreckt und das in einer parallel zu einer durch die Fügerichtung (20) verlaufenden Ebene einen keilförmigen Querschnitt umfasst.

10. Neigefahrzeug (2) nach einem der vorhergehenden Ansprüche, **dadurch gekennzeichnet, dass** das Verstärkungsmittel (22), insbesondere das mindestens eine Festlegeelement (26), der mindestens eine Koppelabschnitt (42) und/oder das mindestens eine Stützelement (46), ein gemeinsames einstückiges Bauteil, insbesondere Spritzgussbauteil, bilden.

## Claims

1. Leaning vehicle (2), having at least one vehicle component (4), such as a swingarm (6) or handlebar, which has a receiving portion (8), and having at least one illumination unit (10) which comprises a head portion (12), in which or on which at least one indicating means (14) is arranged, and which comprises a foot portion (16) and which comprises a joining portion (18) which is arranged on the foot portion (16) and which runs parallel to the receiving portion (8) of the vehicle component (4) and with which the illumination unit (10) is fastened to the receiving portion (8) of the vehicle component (4), wherein the illumination unit (10) can be fastened to the receiving portion (8) along a joining direction (20) running transversely or obliquely to the longitudinal axis of the leaning vehicle (2), **characterized by** at least one reinforcing means (22) which is fastened to the receiving portion (8) of the vehicle component (4), wherein said reinforcing means lies at least in sections transversely to the joining direction (20) against a coupling surface (24) of the foot portion (16) of the illumination unit (10) so as to be in surface contact with said coupling surface, and wherein said reinforcing means circumferentially surrounds the foot portion (16) at least in sections, and wherein the illumination unit (10) comprises its longest extent in a direction parallel to the joining direction (20).

2. Leaning vehicle (2) according to Claim 1, **characterized in that** the reinforcing means (22) is fastened, in particular in a form-fitting, integrally bonded and/or force-fitting manner, to the foot portion (16) of the illumination unit (10).

3. Leaning vehicle (2) according to Claim 2, **characterized in that** the reinforcing means (22) comprises at least one elastically bendable fastening element (26) which, upon transferring the reinforcing means (22) along a coupling direction (30), can be displaced into a coupled arrangement transversely to the coupling direction (30) and, in the coupled arrangement, can be automatically moved into the nondisplaced arrangement, and which, in the coupled arrangement, engages behind a recess (28) on the foot portion (16) of the illumination unit (10) with respect to the coupling direction (30).

4. Leaning vehicle (2) according to Claim 3, **characterized in that** the reinforcing means (22) comprises at least two fastening elements (26) and the foot portion (16) of the illumination unit (10) comprises at least two recesses (28), wherein, in the coupled arrangement, the foot portion (16) is arranged between the two fastening elements (26), and wherein the two fastening elements (26) have a U-shaped or clip-like cross section, and/or **in that** the at least two fastening elements (26) comprise at the respectively free ends a hook-like portion (32) which extends in the direction of the free end of the opposite fastening element (26) and which, in the coupled arrangement, lies against the respective recess (28) of the foot portion (16).

5. Leaning vehicle (2) according to Claim 3 or 4, **characterized in that**, on the side facing the coupling surface (24) of the foot portion (16), the at least one fastening element (26) of the reinforcing means (22) comprises at least one projection (34) extending in the direction of the coupling surface (24) of the foot portion (16) and/or **in that**, on the side facing the fastening element (26) of the reinforcing means (22), the at least one foot portion (16) comprises at least one aperture (36) in the coupling surface (24) which is formed in a corresponding, in particular complementary, manner to the projection (34) of the fastening element (26) and in which the projection (34) is arranged to engage in the joined arrangement.

6. Leaning vehicle (2) according to one of the preceding claims, **characterized in that** the reinforcing means (22) comprises a coupling portion (42) which runs parallel to the receiving portion (8) of the vehicle component (4) and which comprises at least one opening (44) by means of which the reinforcing means (22) can be releasably fastened to the receiving portion (8) of the vehicle component (4) by a fastening means (40).

7. Leaning vehicle (2) according to Claim 6, **characterized in that** the joining portion (18) of the illumination unit (10) comprises at least one cutout by means of which the illumination unit (10) can be releasably fastened to the receiving portion (8) of the vehicle component (4) by a further fastening means (40), and/or **in that** the joining portion (18) of the illumination unit (10) projects beyond the coupling surface (24) of the foot portion (16) in the joined arrangement in the direction of the reinforcing means (22).

8. Leaning vehicle (2) according to one of the preceding claims, **characterized in that** the reinforcing means (22) comprises, between the two fastening elements (26), a continuous clearance (38) which overlaps with the joining portion (18) of the illumination unit (10) and through which the joining portion (18) of the illumination unit (10) is externally accessible at least in part, in particular in the region of the cutout.

9. Leaning vehicle (2) according to one of the preceding claims, **characterized in that** the reinforcing means (22) comprises at least one rib-like supporting element (46) which extends from the at least one fastening element (26) to the coupling portion (42) and which comprises a wedge-shaped cross section in a plane running parallel to a plane through the joining direction (20).

10. Leaning vehicle (2) according to one of the preceding claims, **characterized in that** the reinforcing means (22), in particular the at least one fastening element (26), the at least one coupling portion (42) and/or the at least one supporting element (46), form a common one-piece component, in particular an injection-molded component.

## Revendications

1. Véhicule inclinable (2), avec au moins un composant de véhicule (4), tel qu'un bras oscillant (6) ou un guidon, qui présente une section de réception (8), et avec au moins une unité d'éclairage (10) qui présente une section de tête (12), dans laquelle ou sur laquelle est agencé au moins un moyen d'affichage (14), qui comprend une section de pied (16) et qui comprend une section d'assemblage (18) agencée sur la section de pied (16), qui s'étend parallèlement à la section de réception (8) du composant de véhicule (4) et avec laquelle l'unité d'éclairage (10) est fixée sur la section de réception (8) du composant de véhicule (4), l'unité d'éclairage (10) pouvant être fixée sur la section de réception (8) le long d'une direction d'assemblage (20) s'étendant transversalement ou obliquement par rapport à l'axe longitudinal du véhicule inclinable (2), **caractérisé par** au moins un moyen de renforcement (22) qui est fixé sur la section de réception (8) du composant de véhicule (4), celui-ci s'appliquant transversalement à la direction d'assemblage (20), au moins par sections, contre une surface de couplage (24) de la section de pied (16) de l'unité d'éclairage (10) en la touchant sur sa surface et celui-ci entourant la section de pied (16) sur sa périphérie, au moins par sections, et l'unité d'éclairage (10) comprenant son extension la plus longue dans une direction parallèle à la direction d'assemblage (20).

2. Véhicule inclinable (2) selon la revendication 1, **caractérisé en ce que** le moyen de renforcement (22) est fixé sur la section de pied (16) de l'unité d'éclairage (10), notamment par complémentarité de forme, par liaison de matière et/ou à force.

3. Véhicule inclinable (2) selon la revendication 2, **caractérisé en ce que** le moyen de renforcement (22) comprend au moins un élément de fixation (26) élastiquement flexible, qui, lors du transfert du moyen de renforcement (22) le long d'une direction de couplage (30), peut être poussé en un agencement couplé transversalement à la direction de couplage (30) et qui, dans l'agencement couplé, peut être déplacé automatiquement dans l'agencement non poussé et qui, dans l'agencement couplé, s'engage derrière un retrait (28) sur la section de pied (16) de l'unité d'éclairage (10) par rapport à la direction de couplage (30).

4. Véhicule inclinable (2) selon la revendication 3, **caractérisé en ce que** le moyen de renforcement (22) comprend au moins deux éléments de fixation (26) et la section de pied (16) de l'unité d'éclairage (10) comprend au moins deux retraits (28) ; dans l'agencement couplé, la section de pied (16) étant agencée entre les deux éléments de fixation (26) et les deux éléments de fixation (26) présentant une section transversale en forme de U ou de type pince, et/ou **en ce que** les au moins deux éléments de fixation (26) comprennent, aux extrémités libres respectives, une section de type crochet (32) qui s'étend en direction de l'extrémité libre de l'élément de fixation (26) opposé et qui, dans l'agencement couplé, s'applique contre le retrait (28) respectif de la section de pied (16).

5. Véhicule inclinable (2) selon la revendication 3 ou 4, **caractérisé en ce que** l'au moins un élément de fixation (26) du moyen de renforcement (22) comprend, sur le côté tourné vers la surface de couplage (24) de la section de pied (16), au moins une saillie (34) s'étendant en direction de la surface de couplage (24) de la section de pied (16) et/ou **en ce que** l'au moins une section de pied (16) comprend, sur le côté tourné vers l'élément de fixation (26) du moyen de renforcement (22), au moins un évidement (36) dans la surface de couplage (24), qui est réalisé de manière correspondante, notamment de manière complémentaire, à la saillie (34) de l'élément de fixation (26) et dans lequel la saillie (34) est agencée de manière à s'engager dans l'agencement assemblé.

6. Véhicule inclinable (2) selon l'une quelconque des revendications précédentes, **caractérisé en ce que** le moyen de renforcement (22) comprend une section de couplage (42) s'étendant parallèlement à la section de réception (8) du composant de véhicule (4), qui comprend au moins une ouverture (44) à travers laquelle le moyen de renforcement (22) peut être fixé de manière amovible à la section de réception (8) du composant de véhicule (4) par un moyen de fixation (40).

7. Véhicule inclinable (2) selon la revendication 6, **caractérisé en ce que** la section d'assemblage (18) de l'unité d'éclairage (10) comprend au moins une échancrure à travers laquelle l'unité d'éclairage (10) peut être fixée de manière amovible sur la section de réception (8) du composant de véhicule (4) par un autre moyen de fixation (40) et/ou **en ce que** la section d'assemblage (18) de l'unité d'éclairage (10) dépasse la surface de couplage (24) de la section de pied (16) dans l'agencement assemblé en direction du moyen de renforcement (22).

8. Véhicule inclinable (2) selon l'une quelconque des revendications précédentes, **caractérisé en ce que** le moyen de renforcement (22) comprend, entre les deux éléments de fixation (26), un espace libre continu (38) qui chevauche la section d'assemblage (18) de l'unité d'éclairage (10) et à travers lequel la section d'assemblage (18) de l'unité d'éclairage (10) est au moins partiellement accessible de l'extérieur, notamment dans la zone de l'échancrure.

9. Véhicule inclinable (2) selon l'une quelconque des revendications précédentes, **caractérisé en ce que** le moyen de renforcement (22) comprend au moins un élément de support de type nervure (46) qui s'étend depuis l'au moins un élément de fixation (26) jusqu'à la section de couplage (42) et qui comprend une section transversale en forme de coin dans un plan parallèle à un plan passant par la direction d'assemblage (20).

10. Véhicule inclinable (2) selon l'une quelconque des revendications précédentes, **caractérisé en ce que** le moyen de renforcement (22), notamment l'au moins un élément de fixation (26), l'au moins une section de couplage (42) et/ou l'au moins un élément de support (46), forment un composant commun d'une seule pièce, notamment un composant moulé par injection.
